# EUROPEAN PATENT SPECIFICATION

(11) **EP 0 788 317 B1**
(45) Date of publication and mention of the grant of the patent: **21.11.2001**
(21) Application number: 93917571.7
(22) Date of filing: 12.08.1993
(51) Int. Cl.: A23L 1/217

(54) **METHOD AND APPARATUS FOR THE PRODUCTION OF SNACKS**
VERFAHREN UND GERÄT FÜR DIE HERSTELLUNG VON SNACKS
PROCEDE ET APPAREIL POUR LA PRODUCTION D'EN-CAS

(43) Date of publication of application: 13.08.1997
(73) Proprietor: SNACKO A/S, 2800 Lyngby (DK)
(72) Inventor: ULLUM, Henrik, 2690 Karlslunde (DK); KORREMANN, Birgitte, 2720 Vanlose (DK); FOSBOL, Peder, 2800 Lyngby (DK)
(74) Representative: Lund, Preben
(86) International application number: DK9300261
(87) International publication number: WO9505089

(56) References cited:
- US-A- 3 502 479
- US-A- 4 800 090

## Description

### State of the art

The invention relates to a method for the production of vegetable snacks without using or adding fats and as further described in the introduction to claim 1, and an apparatus for carrying out the method, for example as described in the introduction to claim 7.

For several years it has been known to produce vegetable snacks, ie. crisp and crunchy snacks of vegetable material, such as potatos, apples, bananas and similer vegetables or root vegetables. The vegetable material is sliced or formed into slices which then undergo a treatment reducing the water content so much that a preservation is obtained while at the same time obtaining a crisp, tasty and healthy product with a pleasant appearance. The water content must be reduced so that the dry-matter content is above 85% and therefore the product must be kept in air-tight bags until it is consumed if it is not to loose its crispness and taste. Reduction of the water content may take place by vacuum drying or freeze drying which, however, are comparatively costly processes and which will not always provide a product with a sufficiently pleasant appearance.

GB patent application no. 2,254,994 describes a method and an apparatus for producing potato chips without fat wherein the chips are first dried to have a moisture content below 30% whereafter they are dried at 140°-220°C to obtain a final, suitable residual moisture, crispness and a desired appearance. The drying is made by hot air while effectively stirring, which is a difficult process to control and moreover energywise a very expensive way of carrying out the drying process. Furthermore, this method will often necessitate readjustment of the moisture content by adding water prior to the final drying which increases the energy consumption.

Others therefore apply a heat treatment for producing vegetable chips without adding fat whereby it is possible by a suitable heat treatment to obtain snacks with the desired properties regarding appearance, crispness, taste and structure. US patent no. 4,800,090 and US patent no. 5,049,711 describe a method and an apparatus for producing potato chips by applying a heat treatment without using or adding fats, the heat treatment process comprising a first step of heat treatment with infrared radiation of the potato slices, then a microwave treatment of the pre-dried potato slices and, finally, a post-drying process again with infrared radiation in order to obtain a desired browning and a desired dry-matter content in the finished product. Finally, the finished product is radiated prior to packaging with ultraviolet light to ensure preservation.

Application of microwave energy, however, is technically complicated and costly. Microwave ovens for continuous use require compliance with many safety measures which are to prevent the radiation from getting outside the oven. Moreover, it is generally known that it is difficult to obtain an even and uniform heating with microwave radiation at least not without a number of further technical facilities which will distribute the field evenly within the oven. The process also calls for the application of a special conveyor belt through the microwave oven which means that the potato snacks are to be conveyed from one belt by the pre-drying to the next belt by the microwave treatment and then to a new belt, the third belt, by the post-drying. This will provide an inappropriate and complicated apparatus and will probably require synchronisation of the first two belts since the pre-drying and the microwave treatment will require that the potato slices form a single layer on the belt. There are therefore a number of drawbacks in the known process and the known apparatus therefor which drawbacks are mainly caused by the application of microwave energy for the central treatment of the potato slices in that this treatment is to give the potato slices the desired properties.

### Advantages of the invention

By proceeding as disclosed in the characterising part of claim 1 the use of microwave treatment and other complicated treatment forms for the central treatment of the vegetable objects, namely the heat treatment in the treatment zone itself where the puffing takes place, is completely avoided. It has surprisingly proved possible to provide the vegetable objects with the required energy for the puffing by infrared heat radiation. In the pre-drying zone the objects must be dried in a controlled manner so as to form on the surface of each object a thin, relatively uniform shell. By the puffing in the treatment zone there is then supplied so much heat that a boiling of the water which is still bound in the inner tissue of the object occurs. The structure is thereby puffed into a loose, crisp surface resulting in a product with the desired properties. The post-drying is to ensure that the finished product has a water activity which is low enough to preserve the product without adding preservatives or without any further finishing treatment. The product is then packed in suitable packages and will keep for a long period of time.

The pre-drying and the post-drying can be made in a known manner, for example by airdrying or by applying infrared radiation. If proceeding as disclosed in the characterising part of claim 2, applying infrared radiation for the pre-drying as well as the post-drying, a shorter processing time is achieved which permits the application of shorter conveyor belts and shorter drying zones resulting in a smaller and cheaper apparatus.

If the vegetable snacks to be produced are potato chips, there is proceeded according to the invention as further disclosed in claim 3. It has proved possible to produce potato chips with the desired properties in this manner quite without complicated controlling processes. If the temperature in the individual zones is as stated, and the conveyor belts and the individual zones have suitable lengths, then the potato chips will get suitable treatment periods in the individual zones. With the preferred temperatures as disclosed in claim 3, the pre-drying can take place in about 1-5 min., the treatment itself, ie. the puffing, in about 0.5-3 min., and the post-drying in about 4-15 min., so that the total processing time by a continuous production can be kept under 10 minutes.

By proceeding as disclosed in the characterising part of claim 4, the method is simplified in that it has proved possible to integrate the pre-drying zone and the treatment zone into one zone with an increasing temperature in the travelling direction until the puffing has been achieved as desired. This will reduce the processing time which also means that the production apparatus can be reduced in size and thus also costwise.

By proceeding as disclosed in the characterising part of claim 5, there is obtained a highly uniform end product. The more uniform the thickness of the slices, the more uniform will the final quality be.

Depending on the desired structure in the end product, it is further possible to proceed as disclosed in the characterising part of claim 6. During a pre-treatment immediately before the pre-drying the product may either be boiled or steam-treated by carrying the belt with the slices arranged individually thereon through a bath of boiling water or through a steam chamber. The boiling time will be between 0.5 and 5 min., depending on slice thickness, potato thickness, time of crop etc.

By proceeding as disclosed in the characterising part of claim 7, it is possible to obtain a suitable spicing of the end product. The spicing may be effected by boiling the slices in a solution of spices, for example 2% sodium chloride solution, or by spraying salt and/or spices directly onto the slices on the belt.

If raw slices are directly used as described in claim 3, salt and any spices may be sprayed directly onto the slices on the belt immediately prior to the heat treatment.

The invention also relates to an apparatus for the production of vegetable chips by application of the method according to the invention. The apparatus is designed as further disclosed in the characterising parts of claim 8, 9 or 10. This will provide a processing apparatus wherein it is possible continuously and at a minimum energy consumption to produce vegetable snacks without using fats, for example potato chips. If the apparatus is designed with infrared heat radiation in the pre-drying zone as well as the post-drying zone in addition to the treatment zone, there is obtained an apparatus wherein it is possible in a simple manner to adjust the energy supply and thus the temperature in the individual zones irrespective of these zones being physically separated or being integrated.

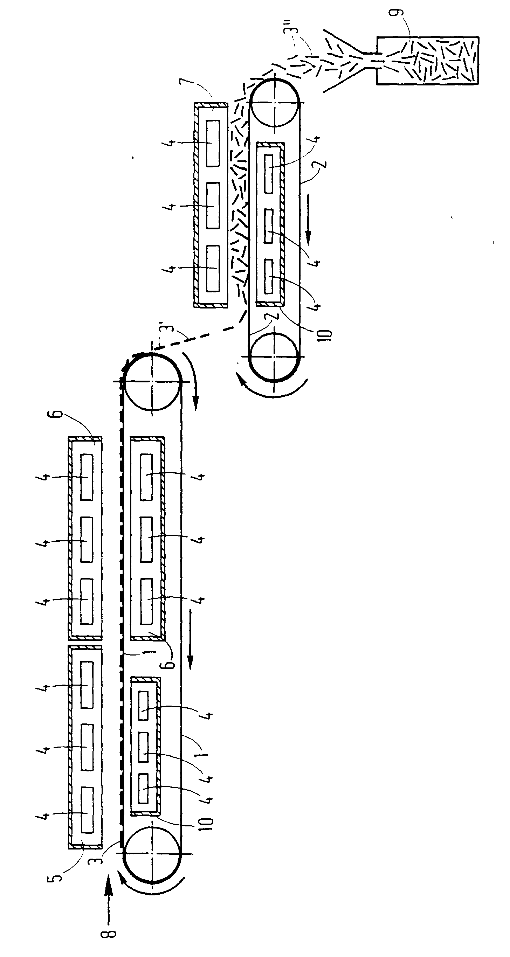

### The drawing

The invention will now be described with reference to the drawing showing a section through an apparatus according to the invention and with reference to the below example.

### Description of the embodiment

The apparatus shown in the drawing comprises two conveyor belts 1, 2, where the first conveyor belt 1 is a so-called net belt. By the belts there are arranged a number of heating units 5, 6, 7, where the heating unit 5 is the pre-drying zone, the heating units 6 form the treatment zone and the heating unit 7 is the post-drying zone. Under the heating unit 5 in the pre-drying zone there may be arranged a reflector or a heating unit 10. The heat treatment units 6 enclose the net belt so that the puffing takes place by heat treatment from both sides. All the heating units are shown with infrared heating units 4. Slices of vegetable material 3 arranged individually on the belt 1, for example in a width of up to several metres, in order to achieve large-scale production capacity are introduced at the feeding point 8. Following pre-drying and puffing the now almost finished snacks 3' are transferred to the post-drying belt 2 which has a substantially lower travelling speed than the first belt 1 such that the snacks will lie on the belt in a thicker layer and at random. The reflector or heating unit 10 under the belt will permit post-drying from both sides. The finished snacks 3'' are then transferred after cooling, if so desired, directly to the packing 9 in the form of suitable packages. The drying can therefore take place two-sidedly either by applying heating units 5, 6, 7, 10 on either side of the belts 1, 2 or by heating units on one side of the belt and reflectors on the other side of the belt or by a combination thereof. It has also proved possible, however, to produce snacks of the mentioned kind by one-sided drying.

The pre-drying with the heating unit 5 may take place by airdrying or as shown by direct infrared radiation. If airdrying is applied, this will be at an air temperature of up to 350°C. At a temperature of for example 200°C, the drying period will be about 4 min. by a slice thickness of 1 mm. In case of infrared radiation, the comparative drying period will be about 1-3 min. depending on whether the potato slices are raw or pre-boiled.

In the puffing zone 6 there is applied a treatment period of 0.5-3,0 min. by infrared radiation. The processing-time in the pre-drying zone 5 and the treatment zone 6 is determined by the speed of the belt 1 and the length of the zones.

In the post-drying zone 7 the drying may take place by hot air at a temperature of 100-250°C for 4-15 min. or as shown by infrared heat radiation. Incidentally, by some types of vegetable objects it has proved advantageous if the post-drying zone has a higher temperature at the beginning of the zone than at the end of the zone. Also here the treatment period is determined by the speed of the belt 2 and the length of the heating zone. To ensure uniform post-drying there may be arranged means immediately above the belt which stir the objects situated on the belt.

There may be used fresh, raw potatos, which have been washed and sliced with or without peel, or preboiled potato slices. In case of pre-treatment the belt 1 will usually be extended so that the raw slices are placed on the conveyor belt directly from the cutting machine and then carried through a boiling section where the slices are boiled either by carrying them through a bath of boiling water or a boiling spice solution or by carrying them through a steam chamber.

### Example

100 kg fresh unpeeled potatos are washed and cut into 1 mm thick slices. Directly from the cutting machine they are individually arranged on a net belt carrying the potato slices through a boiling zone before they are carried through an apparatus which in principle is designed as shown in the drawing.

The end product is 20 kg potato chips produced according to the following process:

| Treatment | Time min. | Temp. °C | % dry matter | | Product weight kg |
|---|---|---|---|---|---|
| | | | start | end | |
| Raw mat. | | | | | 100 |
| Preboiling | 2 | 100 | 17-21 | 17-25 | 80 |
| Predrying | 4 | 200 | 17-25 | 35-45 | 45 |
| Puffing IR | 1 | - | 35-45 | 62-78 | 30 |
| Postdrying | 10 | 225/120 | 62-78 | 95-100 | 20 |

The preboiling took place in a 2% NaCl solution.

The apparatus described above is only to be considered as one example of how the method according to the invention may be applied industrially, and the mentioned example is also just one example of how fat-free vegetable snacks in the form of potato chips may be produced according to the invention. It is obvious to a person skilled in the art that the invention may be applied in numerous different ways within the scope defined by the following patent claims. It is also obvious to a person skilled in the art that the method and the apparatus according to the invention may be used in connection with the production of vegetable snacks of almost any kind of vegetables or root vegetables, including potatos, carrots, onions, apples, leeks, bananas, beets, kiwi fruits etc., all without using fats.

## Claims

1. Method for producing vegetable snacks without using fats by heat treatment in a number of successive zones, namely a pre-drying zone, a treatment zone and a post-drying zone, in that sliced vegetable objects of substantially equal thickness and situated on a conveyor belt in a single layer are conveyed through the zones in the mentioned order,
**characterised in**
a) that in the pre-drying zone the objects are thermally treated at a temperature which is high enough and a period of time which is long enough to form a thin shell on the surface of the objects,
b) that in the treatment zone the objects are then treated on both sides with infrared heat radiation at a higher temperature than in the pre-drying zone and for so long that puffing of the objects is achieved, and
c) that in the post-drying zone the objects are then further thermally treated at a temperature which is lower than that of the pre-drying zone until the objects reach a dry-matter content above 85%, preferably above 90%.

2. Method according to claim 1, **characterised in that** the thermal treatment in the pre-drying zone as well as the post-drying zone is by infrared heat radiation.

3. Method according to claim 1 or 2 and where the vegetable objects are raw potato slices of substantially equal thickness which are fed to the pre-drying zone directly from a cutting machine, **characterised in**
a) that the temperature in the pre-drying zone is maintained at up to 350°C, preferably about 200°C,
b) that the required temperature in the treatment zone is achieved by infrared radiation,
c) that the temperature in the post-drying zone is varied between 250°C and 100°C, and
that the potato slices are conveyed on a conveyor belt so that the period of time within which the potato slices are in the individual zones will depend on the extension of the zones.

4. Method according to claim 1, 2 or 3, **characterised in that** the pre-drying zone and the treatment zone are integrated but with a higher temperature at the end of the zone.

5. Method according to claim 3 or 4, **characterised in that** the slices are all of equal thickness of 0.5-3 mm, preferably 0.9-1.2 mm.

6. Method according to claim 1 or 2 and where the vegetable objects are potato slices of substantially equal thickness and which, prior to being fed to the pre-drying zone, have been pre-treated by boiling or blanching at a temperature of approx. 100°C, **characterised in**
a) that the temperature in the pre-drying zone is maintained at up to 350°C, preferably about 200°C,
b) that the required temperature in the treatment zone is achieved by infrared radiation,
c) that the temperature in the post-drying zone is varied between 250°C and 100°C, and
that the potato slices are conveyed on a conveyor belt so that the period of time within which the potato slices are in the individual zones will depend on the extension of the zones.

7. Method according to any one of claims 1-6, **characterised in that** the pre-treatment comprises addition of spices, e.g. sodium chloride.

8. Apparatus for the production of vegetable snacks without fats by heat treatment in a number of successive zones, namely a pre-drying zone (5), a treatment zone (6) and a post-drying zone (7), in that sliced vegetable objects (3) of substantially equal thickness and situated in one layer on a conveyor belt (1) are fed into the pre-drying zone and conveyed through the zones by means of conveyor belts, **characterised in that** the treatment zone (6) comprises infrared radiating heating elements (4).

9. Apparatus according to claim 8, **characterised in that** in the treatment zone there may be arranged heating elements (4) on either side of the belt (1) and that the belt may be a net belt.

10. Apparatus according to claim 8 or 9, **characterised in that** a first belt (1) conveys the objects through the pre-drying zone (5) as well as the treatment zone (6) whereafter they are conveyed to a second conveyor belt (2) carrying the objects through the post-drying zone (7) and then directly to a packing apparatus **in that** the second belt (2) has a slower rate of speed than the first-mentioned belt (1).

## Patentansprüche

1. Verfahren zum Herstellen von pflanzlichen Snacks ohne Verwendung von Fetten durch Wärmebehandlung in einer Anzahl von einander folgenden Zonen, nämlich einer Vortrocknungs-Zone, einer Behandlungs-Zone und einer Nachtrocknungs-Zone, indem in Scheiben geschnittene pflanzliche Gegenstände von im wesentlichen gleicher Dicke und auf einem Förderband in einer einzigen Schicht liegend durch die Zonen in der angegebenen Reihenfolge gefördert werden,
**dadurch gekennzeichnet,**
a) daß in der Vortrocknungs-Zone die Gegenstände wärmebehandelt werden bei einer Temperatur, die hoch genug ist, und einer Zeitdauer, die lang genug ist, um eine dünne Schale an der Oberfläche der Gegenstände zu bilden,
b) daß in der Behandlungs-Zone die Gegenstände dann auf beiden Seiten mit Infrarot-Wärmestrahlung bei einer höheren Temperatur als in der Vortrocknungs-Zone und solange behandelt werden, daß ein Aufblähen der Gegenstände erreicht wird, und
c) daß in der Nachtrocknungs-Zone die Gegenstände dann bei einer Temperatur, die niedriger als die der Vortrocknungs-Zone ist, weiter wärmebehandelt werden, bis die Gegenstände einen Trockenmaterial-Gehalt von über 85 %, vorzugsweise über 90 % erreichen.

2. Verfahren nach Anspruch 1, **dadurch gekennzeichnet, daß** die Wärmebehandlung in der Vortrocknungs-Zone und auch in der Nachtrocknungs-Zone mittels Infrarot-Wärmestrahlung erfolgt.

3. Verfahren nach Anspruch 1 oder 2 und bei dem die pflanzlichen Gegenstände rohe Kartoffelscheiben von im wesentlichen gleicher Dicke sind, die der Vortrocknungs-Zone unmittelbar von einer Schneidmaschine zugeführt werden, **dadurch gekennzeichnet**,
a) daß die Temperatur in der Vortrocknungs-Zone bei bis zu 350° C, vorzugsweise um 200° C gehalten wird,
b) daß die erforderliche Temperatur in der Behandlungs-Zone durch Infrarot-Strahlung erreicht wird,
c) daß die Temperatur in der Nachtrocknungs-Zone zwischen 250° C und 100° C geändert wird, und
daß die Kartoffelscheiben auf einem Förderband so gefördert werden, daß die Zeitdauer, in der die Kartoffelscheiben in den jeweiligen Zonen sind, von der Ausdehnung der Zonen abhängt.

4. Verfahren nach Anspruch 1, 2 oder 3, **dadurch gekennzeichnet, daß** die Vortrocknungs-Zone und die Behandlungs-Zone zusammengefaßt sind, aber mit einer höheren Temperatur am Ende der Zone versehen sind.

5. Verfahren nach Anspruch 3 oder 4, **dadurch gekennzeichnet, daß** die Scheiben alle von gleicher Dicke von 0,5 - 3 mm, vorzugsweise 0,9 - 1,2 mm sind.

6. Verfahren nach Anspruch 1 oder 2 und bei dem die pflanzlichen Gegenstände Kartoffelscheiben sind, die von im wesentlichen gleicher Dicke sind und die vor dem Zuführen zu der Vortrocknungs-Zone durch Kochen oder Brühen bei einer Temperatur von ungefähr 100° C vorbehandelt worden sind, **dadurch gekennzeichnet,**
a) daß die Temperatur in der Vortrocknungs-Zone bei bis zu 350° C, vorzugsweise um 200° C gehalten wird,
b) daß die erforderliche Temperatur in der Behandlungs-Zone durch Infrarot-Strahlung erreicht wird,
c) daß die Temperatur in der Nachtrocknungs-Zone zwischen 250° C und 100° C geändert wird, und
daß die Kartoffelscheiben auf einem Förderband so gefördert werden, daß die Zeitdauer, in der die Kartoffelscheiben in den jeweiligen Zonen sind, von der Ausdehnung der Zonen abhängt.

7. Verfahren nach einem der Ansprüche 1 - 6, **dadurch gekennzeichnet, daß** die Vorbehandlung eine Zugabe von Gewürzen, z. B. Kochsalz umfaßt.

8. Gerät für die Herstellung von pflanzlichen Snacks ohne Fette durch Wärmebehandlung in einer Anzahl von einander folgenden Zonen, nämlich einer Vortrocknungs-Zone (5), einer Behandlungs-Zone (6) und einer Nachtrocknungs-Zone (7), indem in Scheiben geschnittene pflanzliche Gegenstände (3) von im wesentlichen gleicher Dicke und auf einem Förderband (1) in einer einzigen Schicht liegend der Vortrocknungs-Zone zugeführt und durch die Zonen mittels Förderbändern gefördert werden, **dadurch gekennzeichnet, daß** die Behandlungs-Zone (6) infrarotstrahlende Wärmeelemente (4) umfaßt.

9. Gerät nach Anspruch 8, **dadurch gekennzeichnet, daß** in der Behandlungs-Zone Wärmeelemente (4) auf jeder Seite des Bandes (1) angeordnet sein können und daß das Band ein Netzband sein kann.

10. Gerät nach Anspruch 8 oder 9, **dadurch gekennzeichnet, daß** ein erstes Band (1) die Gegenstände durch die Vortrocknungs-Zone (5) und auch durch die Behandlungs-Zone (6) fördert, wonach sie auf ein zweites Förderband (2) gefördert werden, das die Gegenstände durch die Nachtrocknungs-Zone (7) und dann unmittelbar zu einem Verpackungsgerät trägt, wobei das zweite Band (2) eine geringere Geschwindigkeit hat als das zuerst erwähnte Band (1).

## Revendications

1. Procédé de fabrication d'amuse-gueule à base de végétaux sans utiliser de matières grasses par traitement thermique dans un certain nombre de zones successives, c'est-à-dire une zone de pré-séchage, une zone de traitement et une zone de post-séchage, dans lequel des tranches de végétaux d'épaisseur sensiblement égale, disposées sur un convoyeur à courroie en une seule couche sont convoyées à travers les zones dans l'ordre mentionné,
**caractérisé en ce que :**
a) dans la zone de pré-séchage, les tranches sont traitées thermiquement à une température suffisamment élevée et pendant une période de temps suffisamment longue pour former une croûte mince à la surface des tranches,
b) dans la zone de traitement les tranches sont ensuite traitées sur les deux faces au moyen d'un rayonnement calorifique infrarouge à une température supérieure à celle de la zone de pré-séchage et pendant une durée telle qu'on obtient un gonflement des tranches, et
c) **en ce que** dans la zone de post-séchage les tranches sont alors traitées thermiquement de façon supplémentaire à une température inférieure à celle de la zone de pré-séchage jusqu'à ce que les tranches atteignent une teneur en matière sèche supérieure à 85 %, de préférence supérieure à 90 %.

2. Procédé selon la revendication 1, **caractérisé en ce que** le traitement thermique dans la zone de pré-séchage, de même que dans la zone de post-séchage, est effectué au moyen d'un rayonnement calorifique infrarouge.

3. Procédé selon la revendication 1 ou 2, dans lequel les tranches de végétaux sont des tranches de pomme de terre crue d'épaisseur sensiblement égale qui sont fournies dans la zone de pré-séchage directement à partir d'une machine de découpe,
**caractérisé en ce que :**
a) la température dans la zone de pré-séchage est maintenue jusqu'à 350°C, de préférence environ 200°C,
b) la température requise dans la zone de traitement est obtenue par un rayonnement infrarouge,
c) la température dans la zone de post-séchage est fait varier entre 250°C et 100°C, et
d) les tranches de pomme de terre sont transportées sur un convoyeur à courroie de sorte que la durée pendant laquelle les tranches de pomme de terre se trouvent disposées dans les zones individuelles dépend de l'extension de ces zones.

4. Procédé selon la revendication 1, 2 ou 3, **caractérisé en ce que** la zone de pré-séchage et la zone de traitement sont intégrées mais avec une température supérieure à la fin de la zone unique.

5. Procédé selon la revendication 3 ou 4, **caractérisé en ce que** les tranches ont toutes une épaisseur égale de 0,5 à 3 mm, de préférence de 0,9 à 1,2 mm.

6. Procédé selon la revendication 1 ou 2, dans lequel les tranches de végétaux sont des tranches de pommes de terre d'épaisseur sensiblement égale et qui, avant d'être fournies à la zone de pré-séchage, ont été prétraitées par ébullition ou blanchiment à une température d'environ 100°C, **caractérisé en ce que :**
a) la température dans la zone de pré-séchage est maintenue à jusqu'à 350°C, de préférence environ 200°C,
b) la température requise dans la zone de traitement est obtenue au moyen d'un rayonnement infrarouge,
c) la température dans la zone de post-séchage est fait varier entre 250°C et 100°C et
d) les tranches de pomme de terre sont transportées sur un convoyeur à courroie, de sorte que la durée pendant laquelle les tranches de pomme de terre se trouvent disposées dans les zones individuelles dépend de l'extension de ces zones.

7. Procédé selon une quelconque des revendications 1 à 6, **caractérisé en ce que** le pré-traitement comprend l'ajout d'épices, par exemple du chlorure de sodium.

8. Appareil de fabrication d'amuse-gueule végétaux sans matières grasses par traitement thermique dans un certain nombre de zones successives, c'est-à-dire une zone de pré-séchage (5), une zone de traitement (6) et une zone de post-séchage (7), dans lequel des tranches de végétaux (3) d'épaisseur sensiblement égale et disposées sur une seule couche sur un convoyeur à courroie (1) sont délivrées dans la zone de pré-séchage et transporter à travers les zones au moyen de convoyeurs à courroie, **caractérisé en ce que** la zone de traitement (6) comprend des éléments de chauffage par rayonnement infrarouge (4).

9. Appareil selon la revendication 8, **caractérisé en ce que** dans la zone de traitement peuvent être disposés des éléments de chauffage (4) de chaque côté de la courroie (1) et **en ce que** la courroie peut être une courroie en filet.

10. Appareil selon la revendication 8 ou 9, **caractérisé en ce qu**'une première courroie transporte les tranches à travers la zone de pré-séchage (5), de même qu'à travers la zone de traitement (6), après quoi elles sont transportées sur un deuxième convoyeur à courroie (2) transportant les tranches à travers la zone de pré-séchage (7), puis directement à un appareil d'emballage, et en ce que la deuxième courroie (2) a une vitesse plus faible que la courroie (1) mentionnée en premier.
